## Europäisches Patentamt
## European Patent Office
## Office européen des brevets

(19)

(11) Veröffentlichungsnummer: **0 073 255**
**B1**

(12) **EUROPÄISCHE PATENTSCHRIFT**

(45) Veröffentlichungstag der Patentschrift:
**19.06.85**

(21) Anmeldenummer: **81106572.1**

(22) Anmeldetag: **25.08.81**

(51) Int. Cl.⁴: **F 16 C 1/26**

(54) **Bowdenzug mit Bedienungsknopf und Schlauch-Endstück.**

(43) Veröffentlichungstag der Anmeldung:
**09.03.83 Patentblatt 83/10**

(45) Bekanntmachung des Hinweises auf die Patenterteilung:
**19.06.85 Patentblatt 85/25**

(84) Benannte Vertragsstaaten:
**AT DE FR GB IT SE**

(56) Entgegenhaltungen:
**FR - A - 826 317**
**FR - A - 975 892**
**FR - A - 1 224 692**
**FR - A - 2 398 914**
**GB - A - 978 315**
**GB - A - 1 262 441**
**US - A - 3 268 032**
**US - A - 3 985 041**
**US - A - 4 093 241**

(73) Patentinhaber: **DEERE & COMPANY, 1 John Deere Road, Moline Illinois 61265 (US)**

(72) Erfinder: **Schneider, Werner, Berlinerstrasse 6, D-6705 Deidesheim (DE)**

(74) Vertreter: **Feldmann, Bernhard et al, DEERE & COMPANY European Office, Patent Department Steubenstrasse 36-42 Postfach 503, D-6800 Mannheim 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf einen Bowdenzug oder dgl. mit Bedienungskopf oder dgl. und Stellstange, die in einem mit einem Gestell fest verbindbaren Schlauch-Endstück verschiebbar ist, wobei die Stellstange ein der Witterung ausgesetztes Ende aufweist, das in seinem aus dem Schlauch-Endstück austretenden Bereich durch eine Manschette oder dgl. geschützt ist.

Ein Bowdenzug vorgenannten Art ist durch die US-A-4 093 241 bekanntgeworden. Hülse und Dichtungskörper sind so gestaltet, daß ihre Funktion nicht für senkrechten Einbau geeignet ist, weil sich im besonders kritischen Bereich, nämlich dem Eintrittsbereich der Stellstange in die Hülse, Wasser, Schmutzteilchen etc, ansammeln können. In der feuchten und kalten Jahreszeit kann insbesondere durch Bildung eines Eispfropfens die Funktion des Zuges völlig lahmgelegt werden. Ein geeigneter fester Anschluß an ein Gestellteil oder dgl. ist zwar vorgesehen aber nicht dargestellt, ebensowenig eine Möglichkeit zu direkter manueller Betätigung der Stellstange.

Dasselbe gilt für eine Stelleinrichtung mit Bowdenzug, wie sie in der GB-A-1 262 441 dargestellt ist. Die Gestaltung der Manschette ist dort immerhin in bezug auf die Abdichtungswirkung bei senkrechter Anordnung günstiger gestaltet. Für eine direkte manuelle Bedienbarkeit mangelt es allerdings nicht nur an einem Bedienungsknopf, sondern auch an einer ausreichenden Steifigkeit im Falle der Rückstellung unter Druck.

Schließlich ist aus der FR-A-975 892 ein Bowdenzug mit Bedienungsknopf und Befestigung an einem Gestell oder Rahmenblech beschrieben, wobei diese Befestigung mittels einer Gegenmutter erfolgt, welche auf die Gewindehülse des Schlauch-Endstückes aufschraubbar ist und dazwischen das Gestellteil einklemmt. Es fehlt aber gänzlich an einer Möglichkeit der Abdichtung gegenüber Wasser, Schmutz etc. Auch erscheint die Art der Befestigung zu einfach, um das Lockern der Gegenmutter und damit als Folge sich einstellende Klappergeräusche zuverlässig zu verhindern.

Der Erfindung liegt daher die Aufgabe zugrunde, einen Bowdenzug der eingangs genannten Art so zu gestalten, daß sie direkt manuell bedienbar ist und insbesondere bei annähernd senkrechtem Einbau die vorgenannten Gefahren, d. h. sowohl eine Verschmutzung als auch das Eindringen von Kondens- oder Regenwasser u. a. auch im gezogenen Zustand des Bedienungsknopfes zuverlässig verhindert werden. Weiterhin sollte die Befestigung am Gestell oder Rahmen u. ä. mit einfachen Mitteln und ohne weitere Teile zuverlässig gegen späteres Lokkern gesichert, erfolgen können.

Diese Aufgabe wird gemäß der Erfindung dadurch gelöst, daß das Schlauch-Endstück einen Ringflansch besitzt und daß die Manschette oder dgl. einenends die Stellstange bzw. den Bedienungsknopf dichtend umfaßt, andernends zwischen Gestell und Ringflansch diesen mit ihrem unteren Teil hintergreifend einklemmbar ist unter gleichzeitiger Befestigung des Schlauch-Endstücks am Gestell.

Unter Bowdenzug im Sinne der Erfindung werden alle Arten von Draht- bzw. Drahtlitzenzügen verstanden, bei denen Bewegungen und Kräfte durch einen in einem metallischen Schlauch oder einem Kunststoffschlauch mit innerer z. B. spiralenförmiger metallischer Stütze verschiebbaren Draht oder dgl. übertragen werden. Bowdenzüge werden insbesondere im Kraftfahrzeugbau zur Weiterleitung einer Stellbewegung zu dem betreffenden Aggregat viel verwendet, bei Land- und Baumaschinen mit Dieselmotor insbesondere zur Abstellung der Kraftstoffzufuhr und damit des Motors. Auch Flexballzüge, wo anstelle des Drahtes eine dünne, durch Kugeln geführte Stahlschiene mit gleitender Reibung bewegt wird, gehören hierzu.

Entsprechend wird der Begriff Drahtseil verstanden, bei dem es sich um einen einstückigen Draht, oder ein aus mehreren Drähten zusammengesetztes Drahtseil bzw. eine Drahtlitze oder im Falle des Flexballzuges um eine dünne durch Kugeln geführte Stahlschiene handeln kann. Das Drahtseil oder dgl. endet in einer nichtflexiblen Zustange von gegenüber dem Drahtseil oder dergleichen vergrößertem Durchmesser, die sich im Endstück des Schlauches bewegt, das vorzugsweise als Metallhülse, insbesondere Stahlhülse ausgebildet ist, an die sich der flexible metall- oder kunststoffumspritzte Schlauch geringeren Durchmessers anschließt. Am Ende der nichtflexiblen Zugstange ist der Zug- bzw. Bedienungsknopf fest angebracht.

Vorteilhafterweise besteht das metallische hülsenförmige Schlauch-Endstück aus zwei Teilen, nämlich einer einfachen Hülse, an die sich in Richtung des Stangenaustritts eine metallische Gewindehülse, z. B. aus verzinktem oder verchromtem Stahl oder Nichteisenmetall anschließt, die in ihrem Endbereich einen ringförmigen Flansch aufweist zur Befestigung an einem platten- oder leistenförmigen Teil des Armaturenbrettes bzw. Fahrpultes oder dergleichen und dort in Verbindung mit einer Gegenmutter festklemmbar ist.

Bei der Gestaltung des eigentlichen Abdichtungskörpers gibt es zwei besonders vorteilhafte Ausführungsvarianten: Zum einen die Abdichtungsmuffe die vorzugsweise auf das Schlauch-Endstück lösbar aufschiebbar ist und in Fortsetzung sich nach oben erstreckt und die Zugstange unmittelbar umschließt. Dabei ist der obere Teil der Ausnehmung der Abdichtungsmuffe konisch ausgebildet und die Öffnung der Muffe mit einem gewissen Untermaß gegenüber dem Außendurchmesser der Zugstange bemessen, so daß sich die Muffe zuverlässig an die Zugstange im Austrittsbereich anpreßt.

Die zweite vorteilhafte Variante besteht in der Ausbildung des Abdichtungskörpers als Faltenbalg, der insbesondere am Schlauch-Endstück und am Bedienungsknopf gleichzeitig angebracht sein kann, womit sich ein vollständiger Abschluß des Austrittsbereichs der Zugstange gegenüber äußeren Einflüssen ergibt.

Als besonders vorteilhaft hat es sich erwiesen, den muffen- oder faltenbalgförmigen Abdichtungskörper aus einem gummielastischen Kunststoff mit eine Shorehärte von 45 bis 70, insbesondere 50 bis 60 herzustellen und ihm eine Stützscheibe zuzuordnen, die aus einem relativ steifen Kunststoff mit einer Shorehärte von 80 bis 100, insbesondere 85 bis 95 besteht und den Abdichtungskörper vermittels eines Stützkragens in seinem unteren Bereich seitlich von außen umgreift, um bei Montieren des kompletten Bowdenzug-Endstückes durch Anziehen der Gegenmutter eine unerwünschte Deformation im unteren Bereich des Abdichtungskörpers zu verhindern.

Im übrigen empfiehlt sich eine solche Ausbildung des Abdichtungskörpers, daß das Schlauch-Endstück in bezug auf seinen Endflansch vom gummielastischen Abdichtungskörper umgriffen wird, so daß nicht dieses direkt auf die zumeist metallische oder aus hartem Kunststoff ausgebildete Armaturenwand oder dgl. zu liegen kommt. Durch die Reihenfolge: Endflansch des Endstückes, Unterseite des verhältnismäßig elastischen Abdichtungskörpers, Stützscheibe, vorzugsweise aus härterem Kunststoff, Armaturenwand bzw. entsprechendes Teil, Gegenmutter, evtl. mit Unterlagsscheibe, wird eine solide, haltbare und vor allem keine störenden Rüttelgeräusche beim Fahren erzeugende Ausführungsform der Erfindung gewährleistet.

Im übrigen gilt auch für einfachere Ausführungsformen der Erfindung, daß durch die Verwendung eines Abdichtungskörpers weder Schmutz noch Wasser in den Zug eindringen bzw. eingeschwemmt werden kann, das Schmierfett im Inneren des Zuges folglich nicht ausgeschwemmt werden kann, die Korrosionsgefahr im Inneren des Zuges stark verringert wird und somit die Leichtgängigkeit und Störunanfälligkeit auch langfristig erhalten bleibt. Als besonders wichtiger Vorteil aber ist das Vermeiden des Festfrierens des Zuges in der kühlen Jahreszeit zu nennen.

Weitere vorteilhafte Ausführungsformen sind in Unteransprüchen gekennzeichnet.

Im folgenden wird die Erfindung anhand eines Ausführungsbeispiels näher erläutert, aus dem sich weitere Merkmale und Vorteile der Erfindung entnehmen lassen: In der Zeichnung zeigt

Fig. 1 einen montierten Bowdenzug mit Schlauch-Endstück und Bedienungsknopf mit einem muffenförmigen Abdichtungskörper;

Fig. 2 einen montierten Bowdenzug mit Schlauch-Endstück und Bedienungsknopf, der einen Faltenbalg als Abdichtungskörper aufweist.

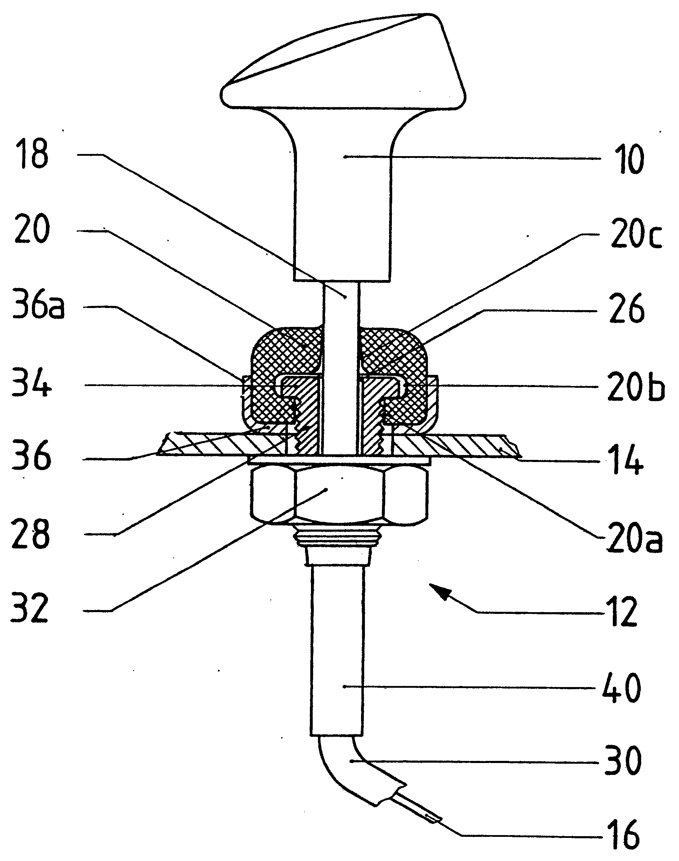

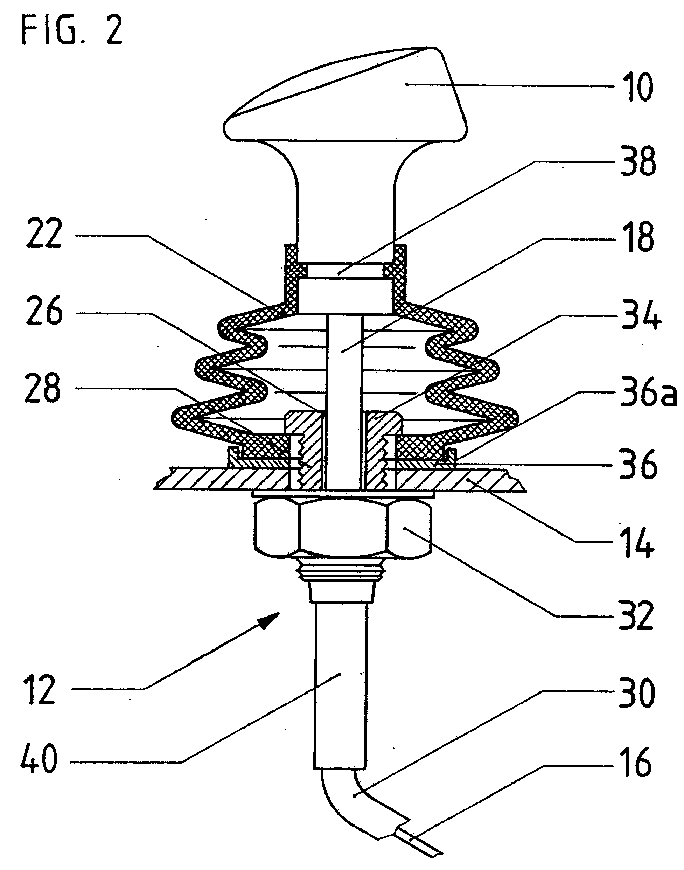

Die in den Figuren 1 und 2 benutzten Bezugsziffern entsprechen einander weitgehend. In beiden Figuren wird der Bowdenzug in leicht schematisiertem Aufriß gezeigt, wobei zur Verdeutlichung der Ausgestaltung des Endstücks und des Abdichtungskörpers die Figuren jeweils in diesem Bereich als senkrechter Schnitt ausgeführt und ansonsten perspektivisch ausgebildet sind.

Oben im Bild sieht man jeweils den Bedienungs- bzw. Zugknopf 10, der fest mit der Zugstange 18 verbunden ist. Der Knopf 10, kann insbesondere ein Kunststoff-Spritzgußkörper sein, die Verbindung mit der Zugstange 18 kann durch Aufpressung, Verschraubung etc. erfolgen. Die Zugstange 18 kann vorzugsweise als Rohr oder massiver Stab aus verzinktem Stahl bestehen. Die Zugstange 18 setzt sich außerhalb des Schlauch-Endstückes 12 als Drahtseilzug 16 fort. Das Schlauch-Endstück 12 ist im Falle der gezeigten Ausführungsform zweiteilig ausgebildet und besteht erstens aus der Gewindehülse 28 mit Flansch 34, z. B. aus Automatenstahl gedreht und ggf. chromiert oder anderweitig gegen Korrosion geschützt. Als weiteres Teil des Endstückes 12 schließt sich an die Gewindehülse 28 ein verzinktes Metallrohr 40 an, das sich fortsetzt in den eigentlichen und flexiblen Bowdenzug-Schlauch 30, der z. B. aus einem mit Polyäthylen umspritzten Metallsprialbandschlauch bestehen kann. Das Festklemmen des Schlauch-Endstücks 12 erfolgt im Falle beider Figuren nach Anziehen der Gewindemutter 32, wodurch der Flansch 34 des Schlauch-Endstücks 12 gegen die Armaturenwand 14 bzw. ein entsprechendes platten- oder leistenförmiges Teil gepreßt wird. Die Anpressung geschieht — wie ersichtlich — hier nicht unmittelbar, sondern über das untere Teil des Abdichtungskörpers 20 bzw. 22, das seinerseits im Falle der Figur 1 von einer metallischen Stützscheibe 36 und im Falle der Figur 2 von einer Kunststoff-Stützscheibe 36 seitlich von außen umfaßt wird, um ein Ausweichen bzw. Deformieren zu verhindern.

Im Falle der Figur 1 ist der Abdichtungskörper 20 etwa nach Art einer Muffe ausgebildet, wobei die innere Ausnehmung dreistufig gestaltet ist. Sie ist im unteren Bereich 20a etwa dem Außendurchmesser der Gewindehülse 28 des Schlauch-Endstücks 12 angepaßt. Im mittleren Bereich 20b ist die Ausnehmung als vertiefte Ringnut ausgebildet zur Aufnahme des Flansches 34. Im oberen Bereich ist der Innendurchmesser der Abdichtungsmuffe 20 konisch nach oben sich verengend ausgestaltet, wobei der Innendurchmesser der Ausnehmung im Anschluß an den Bereich 20b etwas größer als der Außendurchmesser der Zugstange 18 ausgebildet ist, in der oberen Hälfte des Bereichs 20c dagegen konisch zuläuft und an der Austrittsstelle ein gewisses Untermaß gegenüber dem Außendurchmesser der Zugstange 18 aufweist, um ein sicheres Anpressen zu gewährleisten. Im Falle der bevorzugten Shorehärte von 50 bis 60 ist die vorzugsweise aus Weich-PVC hergestellte Abdichtungsmuffe 20 genügend elastisch, um von oben über den Flansch 34 des Endstücks 12 geschoben bzw. gestülpt zu werden. Im Falle dieser weichen Ausführung ist die Verwendung einer Stützscheibe 36 von besonderer Bedeutung. Besonders zweckmäßig ist die Herstellung aus Kunststoff mit einer Shorehärte von etwa 85 bis 95 in Kombination mit einer solchen Gestaltung der Stützscheibe 36, insbesondere deren Öffnung, daß dieses Element trotz einer gewissen Steifigkeit über den Flansch 34 von oben zur Montage eingebracht werden kann. Die Stützscheibe 36 umgreift den Abdichtungskörper 20 bzw. 22 von unten und ihr Kragen 36a stützt den relativ weicheren Abdichtungskörper 20 bzw. 22 seitlich ab und verhindert damit bei der Montage bzw. dem Festschrauben der Gegenmutter eine übermäßige Deformation des Abdichtungskörpers 20 bzw. 22.

Figur 2 unterscheidet sich von Figur 1 praktisch nur durch die Verwendung eines als Faltenbalg 22 ausgebildeten Abdichtungskörpers. Auch dieser umgreift in seinem unteren Teil den Flansch 34 und wird selbst wieder von der vorerwähnten Stützscheibe 36 zwecks Stabilisierung seitlich umfaßt. Auch der Faltenbalg 22 kann aus Weich-PVC mit der vorgenannten Shorehärte hergestellt sein. Er kann in verschiedener Weise am Bedienungsknopf 10 angebracht sein. Eine besonders einfache Art der Montage ist möglich, wenn er im oberen Teil einen Steg aufweist zum Einschieben in eine entsprechend gestaltete Nut 38 am unteren Teil des Bedienungsknopfes 10. Sofern die Nut 38 spritztechnisch Umstände bereitet, kann der Faltenbalg 22 mit seinem oberen Kragen beispielsweise in den Hals des Bedienungsknopfes 10 eingeschoben und dort angeklebt werden.

**Patentansprüche**

1. Bowdenzug oder dgl. mit Bedienungskopf oder dgl. und Stellstange (18), die in einem mit einem Gestell (14) fest verbindbaren Schlauch-Endstück (12) verschiebbar ist, wobei die Stellstange ein der Witterung ausgesetztes Ende aufweist, das in seinem aus dem Schlauch-Endstück austretenden Bereich durch eine Manschette (20, 22) oder dgl. geschützt ist, dadurch gekennzeichnet, daß das Schlauch-Endstück (12) einen Ringflansch (34) besitzt und daß die Manschette (20, 22) oder dgl. einenends die Stellstange (18) bzw. den Bedienungsknopf (10) dichtend umfaßt, andernends zwischen Gestell (14) und Ringflansch (34) diesen mit ihrem unteren Teil hintergreifend einklemmbar ist unter gleichzeitiger Befestigung des Schlauch-Endstücks am Gestell (14).

2. Stelleinrichtung nach Anspruch 1, dadurch gekennzeichnet, daß die Manschette (20, 22) aus gummielastischem Material besteht.

3. Stelleinrichtung nach Anspruch 1 oder 2, gekennzeichnet durch eine Stützscheibe (36), die mit ihrem axialen Kragen (36a) den unteren Teil der Manschette (20, 22) seitlich von außen umgreift.

4. Stelleinrichtung nach Anspruch 3, dadurch gekennzeichnet, daß die Stützscheibe (36) aus einem relativ steifen Kunststoff mit einer Shorehärte von 80 bis 100, insbesondere 85 bis 95 besteht.

5. Stelleinrichtung nach Anspruch 3, dadurch gekennzeichnet, daß die Stützscheibe (36) aus Metall gefertigt ist.

6. Stelleinrichtung nach einem der vorangehenden Ansprüche, dadurch gekennzeichnet, daß die Manschette (20) muffenförmig ausgebildet ist und mit ihrem oberen Teil die Stellstange (18) unmittelbar umschließt.

7. Stelleinrichtung nach Anspruch 6, dadurch gekennzeichnet, daß die Ausnehmung der Muffe (20) dreistufig gestaltet und im unteren Bereich (20a) etwa dem Außendurchmesser des Schlauch-Endstücks (12), im mittleren Bereich (20b) axial etwa der Stärke und radial etwa dem Durchmesser des Ringflansches (34) und im oberen Bereich (20c) etwa dem Durchmesser der Stellstange (18) angepaßt ist.

8. Stelleinrichtung nach Anspruch 7, dadurch gekennzeichnet, daß die Ausnehmung der Abdichtungsmuffe (20) im oberen Bereich (20c) nach Art einer Dichtungslippe konisch ausgebildet ist, wobei sie ein Untermaß gegenüber dem Durchmesser der Stellstange (18) im Austrittsbereich aufweist.

9. Stelleinrichtung nach mindestens einem der Ansprüche 6 bis 8, dadurch gekennzeichnet, daß die Abdichtungsmuffe (20) aus einem gummielastischen Kunststoff mit einer Shorehärte von 45 bis 70, insbesondere 50 bis 60 besteht.

10. Stelleinrichtung nach mindestens einem der Ansprüche 1 bis 5, dadurch gekennzeichnet, daß die Manschette als zusätzlich am Bedienungsknopf (10) befestigter, die Stellstange (18) umschließender Faltenbalg (22) ausgebildet ist.

11. Stelleinrichtung nach Anspruch 10, dadurch gekennzeichnet, daß der Faltenbalg (22) durch Eingriff in eine im unteren Bereich des Bedienungsknopfes (10) umlaufende Nut (38) und entspechend durch Hintergreifen des Ringflansches (34) am Schlauch-Endstück (12) jeweils lösbar befestigt ist.

12. Stelleinrichtung nach Anspruch 10 oder 11, dadurch gekennzeichnet, daß der Faltenbalg (22) aus gummielastischem Material mit einer Shorehärte von 50 bis 60 besteht.

**Claims**

1. A Bowden cable or the like with an operating knob or the like and an adjusting rod (18) which is displaceable in a casing end member (12) which can be fixedly connected to a frame structure (14), wherein the adjusting rod has an end which is exposed to the weather and which is protected by a sleeve (20, 22) or the like, in its region which issues from the casing end member, characterised in that the casing end member (12) has an annular flange (34) and that the sleeve (20, 22) or the like, at one end, sealingly embraces the adjusting rod (18) or the operating knob (10) and at the other end can be clamped between the frame structure (14) and the annular flange (34), engaging behind the latter with its lower portion, with the casing end member being simultaneously secured to the frame structure (14).

2. A bowden cable according to claim 1 characterised in that the sleeve (20, 22) consists of rubber-elastic material.

3. A bowden cable according to claim 1 or claim 2 characterised by a support plate (36) having an axial collar portion (36a) which engages laterally around the lower portion of the sleeve (20, 22) from the outside.

4. A bowden cable according to claim 3 characterised in that the support plate (36) consists of a relatively stiff plastics material with a Shore hardness from 80 to 100 and in particular from 85 to 95.

5. A bowden cable according to claim 3 characterised in that the support plate (36) is made from metal.

6. A bowden cable according to one of the preceding claims characterised in that the sleeve (20) is of a collar-like configuration and directly embraces the adjusting rod (18), with its upper part.

7. A bowden cable according to claim 6 characterised in that the opening in the collar-like member (20) has three steps and in the lower region (20a) is approximately matched to the outside diameter of the casing end member (12), in the middle region (20b) it is axially approximately matched to the thickness and radially approximately to the diameter of the annular flange (34) and in the upper region (20c) it is approximately matched to the diameter of the rod (18).

8. A bowden cable according to claim 7 characterised in that the opening of the sealing sleeve (20) is of a conical configuration in the upper region (20c) in the manner of a sealing lip, wherein it is undersized in relation to the diameter of the adjusting rod (18) in the region in which it emerges.

9. A bowden cable according to at least one of claims 6 to 8 characterised in that the sealing sleeve (20) consists of a rubber-elastic plastics material with a Shore hardness from 45 to 70 and in particular from 50 to 60.

10. A bowden cable according to at least one of claims 1 to 5 characterised in that the sleeve is formed as a bellows (22) which is additionally secured to the operating knob (10) and which encloses the adjusting rod (18).

11. A bowden cable according to claim 10 characterised in that the bellows (22) is releaseably secured respectively by engaging into a groove (38) extending around the operating knob (10) in the lower region and correspondingly by engaging behind the annular flange (34) on the casing end member (12).

12. A bowden cable according to claim 10 or claim 11 characterised in that the bellows (22) consists of rubber-elastic material with a Shore hardness from 50 to 60.

## Revendications

1. Système à câble Bowden ou analogue, comportant un bouton de manoeuvre ou analogue et une tige de commande (18) qui peut coulisser dans un embout de gaine de câble (12) pouvant lui-même être relié rigidement à un châssis ou bâti (14), la tige de commande comportant une extrémité soumise à l'action des intempéries qui est protégée dans sa partie faisant saillie hors de l'embout de gaine de câble par une gaine d'étanchéité (20, 22) ou analogue, caractérisé en ce que l'embout de gaine de câble (12) présente une bride annulaire (34) et en ce que la gaine d'étanchéité (20, 22) ou analogue entoure de façon étanche par une extrémité la tige de commande (18) ou le bouton de manoeuvre (10) et peut être serrée par son autre extrémité entre le châssis ou bâti (14) et la bride annulaire (34), en s'engageant derrière celle-ci par sa partie inférieure, lors de la fixation simultanée de l'embout de gaine de câble sur le châssis ou bâti (14).

2. Système à câble Bowden suivant la revendication 1, caractérisé en ce que la gaine d'étanchéité (20, 22) est constituée par une matière ayant l'élasticité du caoutchouc.

3. Système à câble Bowden suivant la revendication 1 ou 2, caractérisé par une rondelle d'appui (36) entourant latéralement de l'extérieur la partie inférieure de la gaine d'étanchéité (20, 22) par sa collerette axiale (36a).

4. Système à câble Bowden suivant la revendication 3, caractérisé en ce que la rondelle d'appui (36) est réalisée en une matière plastique relativement rigide, ayant une dureté Shore de 80 à 100, en particulier de 85 à 95.

5. Système à câble Bowden suivant la revendication 3, caractérisé en ce que la rondelle d'appui (36) est en métal.

6. Système à câble Bowden suivant une des revendications précédentes, caractérisé en ce que la gaine d'étanchéité (20) a une forme de manchon et entoure directement la tige de commande (18) par sa partie supérieure.

7. Système à câble Bowden suivant la revendication 6, caractérisé en ce que la cavité intérieure du manchon (20) forme trois gradins et est adaptée dans sa partie inférieure (20a) sensiblement au diamètre extérieur de l'embout de gaine (12), dans sa partie médiane (20b), dans le sens axial sensiblement à l'épaisseur, et dans le sens radial sensiblement au diamètre de la bride annulaire (34), et dans sa partie supérieure (20c) sensiblement au diamètre de la tige de commande (18).

8. Système à câble Bowden suivant la revendication 7, caractérisé en ce que la cavité intérieure du manchon d'étanchéité (20) a, dans la partie supérieure (20c) de celui-ci, une forme conique à la manière d'une lèvre d'étanchéité, ce manchon étant, dans la zone de sortie, sous dimensionné par rapport au diamètre de la tige de commande (18).

9. Système à câble Bowden suivant au moins une des revendications 6 à 8, caractérisé en ce que le manchon d'étanchéité (20) est constitué par une matière plastique ayant l'élasticité du caoutchouc at ayant une dureté Shore allant de 45 à 70, en particulier de 50 à 60.

10. Système à câble Bowden suivant au moins une des revendications 1 à 5, caractérisé en ce que la gaine d'étanchéité est constituée par une gaine en soufflet (22) fixée de façon additionnelle sur le bouton de manoeuvre (10) et entourant la tige de commande (18).

11. Système à câble Bowden suivant la revendication 10, caractérisé en ce que la gaine en soufflet (22) est fixée chaque fois de façon amovible par engagement dans une rainure annulaire (38) prévue dans la partie inférieure du bouton de manoeuvre (10) et de façon correspondante par engagement derrière la bride (34) prévue sur l'embout de gaine de câble (12).

12. Système à câble Bowden suivant la revendication 10 ou 11, caractérisé en ce que la gaine en soufflet (22) est constituée par une matière ayant l'élasticité du caoutchouc et ayant une dureté Shore de 50 à 60.

FIG. 2

0 073 255